# EUROPEAN PATENT SPECIFICATION

(11) **EP 2 822 791 B1**
(45) Date of publication and mention of the grant of the patent: **13.05.2020**
(21) Application number: 13711787.5
(22) Date of filing: 07.03.2013
(51) Int. Cl.: B60H 1/32, F25D 11/00, F25D 29/00, F25B 49/02, F02D 41/08, F02D 31/00

(54) **METHOD AND SYSTEM FOR ADJUSTING ENGINE SPEED IN A TRANSPORT REFRIGERATION SYSTEM**
VERFAHREN UND SYSTEM ZUR EINSTELLUNG DER MOTORDREHZAHL BEI EINEM TRANSPORTKÜHLSYSTEM
PROCÉDÉ ET SYSTÈME PERMETTANT D'AJUSTER LA VITESSE DE MOTEUR D'UN SYSTÈME DE RÉFRIGÉRATION DE TRANSPORT

(30) Priority: 09.03.2012 US 201261608851 P
(43) Date of publication of application: 14.01.2015
(73) Proprietor: Carrier Corporation, Farmington, CT 06034 (US)
(72) Inventor: STOCKBRIDGE, Michael, Canastota, New York 13032 (US); REASON, John R., Liverpool, New York 13090 (US); STEELE, John T., Marcellus, New York 13108 (US)
(74) Representative: Schmitt-Nilson Schraud Waibel Wohlfrom Patentanwälte Partnerschaft mbB
(86) International application number: PCT/US2013/029483
(87) International publication number: WO 2013/134453

(56) References cited:
- EP-A1- 2 116 796
- US-A- 5 629 568
- US-A1- 2006 042 296

## Description

### BACKGROUND OF THE INVENTION

The subject matter disclosed herein relates generally to the operation of a transport refrigeration system and, more particularly, to adjusting engine speed in response to loads in a transport refrigeration system.

Fruits, vegetables and other perishable items, including meat, poultry and fish, fresh or frozen, are commonly transported in the cargo box of a truck or trailer, or in an intermodal container, collectively referred to herein as a container. Accordingly, it is customary to provide a transport refrigeration system in operative association with the container for cooling the atmosphere within the container. The transport refrigeration system includes a refrigerant vapor compression system, also referred to as a transport refrigeration unit, and an on-board power unit. The refrigerant vapor compression system typically includes a compressor, a condenser, an expansion device and an evaporator serially connected by refrigerant lines in a closed refrigerant circuit in accord with known refrigerant vapor compression cycles. The power unit includes an engine, typically diesel powered.

In many truck/trailer transport refrigeration systems, the compressor of the transport refrigeration unit is driven by the engine shaft either through a belt drive or by mechanical shaft-to-shaft link. Other systems employ all electric transport refrigeration systems wherein the engine drives an on-board generator for generating sufficient electrical power to drive an electric motor operatively associated with the compressor of the transport refrigeration unit. For example, U.S. Patent 6,223,546, assigned to Carrier Corporation, the same assignee to which this application is subject to assignment, discloses an electrically powered transport refrigeration unit powered by an engine driven synchronous generator capable of producing sufficient power to operate the compressor drive motor and at least one fan motor. With respect to intermodal containers, clip-on power units, commonly referred to as generator sets or gensets, are available for mounting to the intermodal container, typically when the container is being transported by road or rail, to provide electrical power for operating the compressor drive motor of the transport refrigeration unit associated with the container. The genset includes a diesel engine and a generator driven by the diesel engine.

During transport of such perishable items, the temperature within the container must be maintained within strict temperature limits associated with the particular items being transported, regardless of potentially severe operating conditions imposed by the local environment in which the system is operating. For example, when the transport refrigeration system is operated at high ambient temperatures and/or high altitude operation, the power demanded by the refrigeration unit at high cooling capacity demand may exceed the limited shaft power available from the engine, raising the potential for an engine stall or engine overload. In the event of an engine stall or engine overload, the loss of power from the generator will result in an undesired shutdown of the refrigeration unit.

Existing transport refrigeration systems employ an independently controlled diesel engine that directly drives the compressor and fans, or indirectly drives the compressor and fans by providing them with electrical power that is generated with a generator. In either case, the system load (e.g., power required of the refrigeration or heating system) often changes to meet temperature requirements of the container. When the various components in the system are cycled, the system load can change very quickly. When this happens, the engine speed (i.e., RPM) can either droop or overdrive until the engine speed control algorithm has time to adjust to the new load. This causes instability within the system.

US 5 629 568 A discloses a system of an internal combustion engine with rpm actuator, a refrigerator and a direct drive mechanically coupling the engine to the refrigerator, and a control unit including a thermostat for maintaining the internal temperature of the refrigerator at a predetermined set point value, further comprising (a) a refrigerator thermostat setting, (b) a refrigerator external temperature sensor, and (c) an engine speed tachometer, all coupled to the control unit; (d) the control unit determining an optimal engine rpm from the inputs and characteristic function stored in a memory device of the control unit; and (e) the rpm actuator adjusting the rpm to the optimal rpm value.

US 2006/042296 A1 discloses a mobile refrigeration system that includes an engine that is operable at a first speed greater than zero and a second speed greater than zero. A compressor is operable in response to the engine at a first speed and a second speed. The system also includes an evaporator, a first temperature sensor positioned to measure a first temperature, and a second temperature sensor positioned to measure a second temperature. A controller is operable to transition the engine between the first speed and the second speed in response to the first temperature exceeding a first predetermined value and the second temperature falling below a second predetermined value.

According to EP 2 116 796 A1 a deviation calculating means calculates a deviation between an internal temperature detected by a temperature sensor and a target temperature provided from target temperature setting means for each predetermined time period. The deviation is integrated by deviation integrating means. When the integrated value exceeds a predetermined reference value, a rotational speed of an inverter motor that drives a compressor is increased. Therefore, for example, even if an internal temperature temporarily rises because a door is opened temporarily and outside air flows into a storage compartment, because there is no sudden change in the integrated value of the temperature deviation and the rotational speed of the compressor does not react in an oversensitive manner and rapidly increase. Consequently the control is stable. Thus, an unnecessarily oversensitive response to a sudden change in an internal temperature can be prevented, enabling operation at a higher efficiency.

### BRIEF DESCRIPTION OF THE INVENTION

In one embodiment a method for controlling speed of an engine, the engine providing power to a compressor of a transport refrigeration unit, the method including generating a speed request, the engine speed responsive to the speed request; and generating a speed request offset, the speed request offset being added to the speed request to adjust the speed of the engine, monitoring a parameter of the transport refrigeration unit, comparing the parameter of the transport refrigeration unit to a threshold, wherein generating the speed request offset is performed in response to the comparing, wherein comparing the parameter of the transport refrigeration unit to the threshold includes predicting that the parameter will exceed the threshold within a predetermined time.

In another embodiment, a transport refrigeration system includes an engine; a compressor powered by the engine; an engine controller controlling a speed of the engine; and a refrigeration unit controller controlling a transport refrigeration unit, the refrigeration unit controller implementing a process including: generating a speed request, the engine speed responsive to the speed request; generating a speed request offset, the speed request offset being added to the speed request to adjust the speed of the engine, monitoring a parameter of the transport refrigeration unit, comparing the parameter of the transport refrigeration unit to a threshold, wherein generating the speed request offset is performed in response to the comparing, wherein comparing the parameter of the transport refrigeration unit to the threshold includes predicting that the parameter will exceed the threshold within a predetermined time.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of embodiments of the invention are apparent from the following detailed description taken in conjunction with the accompanying drawings in which:
FIG. 1 is a view of an exemplary refrigerated trailer equipped with a transport refrigeration system;
FIG. 2 is a schematic diagram of an exemplary embodiment of a transport refrigeration system wherein the compressor is directly driven by a fuel-fired engine;
FIG. 3 is a schematic diagram of an exemplary embodiment of a transport refrigeration system wherein the compressor is driven by a motor powered by an electric generator driven by a fuel-fired engine;
FIG. 4 depicts an engine control method in an exemplary embodiment; and
FIG. 5 is a plot of engine speed, system load and speed request in an exemplary embodiment.

### DETAILED DESCRIPTION OF THE INVENTION

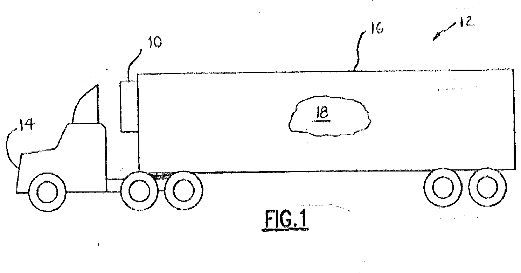

FIG. 1 depicts a transport refrigeration system 10 associated with a trailer 12 pulled by a tractor 14 as depicted in FIG. 1. The exemplary trailer 12 includes a cargo container 16 defining an interior space 18 wherein perishable product is stowed for transport. The transport refrigeration system 10 is operative to climate control the atmosphere within the interior space 18 of the cargo container 16 of the trailer 12. It is to be understood that the method disclosed herein may be applied not only to refrigeration systems associated with trailers, but also to refrigeration systems applied to refrigerated trucks, to intermodal containers equipped with gensets, and to other refrigeration systems including a refrigerant unit having an engine driven compressor.

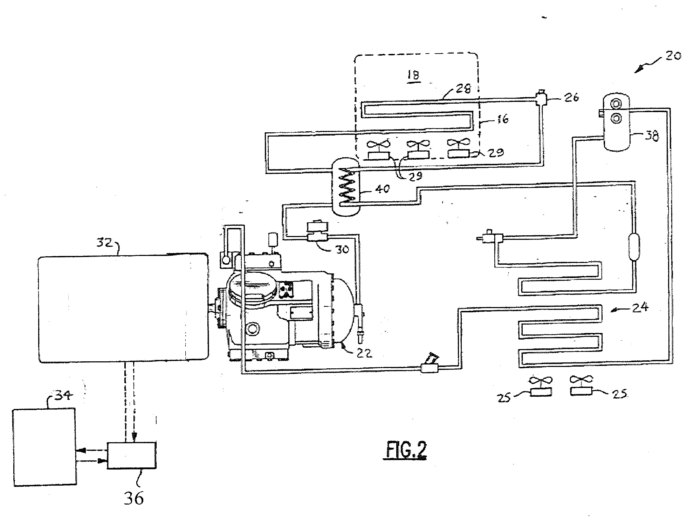

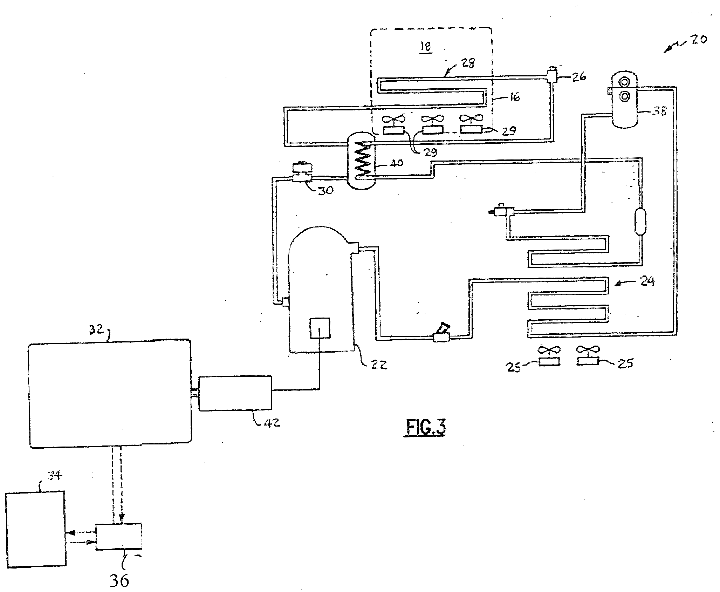

Referring to FIGs. 2 and 3 of the drawings, there are depicted exemplary embodiments of transport refrigeration systems for cooling the atmosphere of a truck, trailer, intermodal container or similar cargo transport unit, collectively referred to herein as a container. The transport refrigeration system 10 includes a transport refrigeration unit 20 including a compressor 22, a refrigerant heat rejection heat exchanger 24 (shown as a condenser in the depicted embodiments) with its associated fan(s) 25, an expansion device 26, a refrigerant evaporator heat exchanger 28 with its associated fan(s) 29, and a suction modulation valve 30 connected in a closed loop refrigerant circuit and arranged in a conventional refrigeration cycle. The transport refrigeration system 10 further includes an engine 32 (e.g., diesel), an electronic refrigeration unit controller 34 and an electronic engine controller 36. The transport refrigeration system 10 is mounted as in conventional practice to an exterior wall of the container with the compressor 22 and the condenser heat exchanger 24 with its associated condenser fan(s) 25, and diesel engine 32 disposed externally of the refrigerated container 16.

As in conventional practice, when the transport refrigerant unit 20 is operating in a cooling mode, low temperature, low pressure refrigerant vapor is compressed by the compressor 22 to a high pressure, high temperature refrigerant vapor and passed from the discharge outlet of the compressor 14 to circulate through the refrigerant circuit to return to the suction inlet of the compressor 22. The high temperature, high pressure refrigerant vapor passes into and through the heat exchange tube coil or tube bank of the condenser heat exchanger 24, wherein the refrigerant vapor condenses to a liquid, thence through the receiver 38, which provides storage for excess liquid refrigerant, and thence through the subcooler coil of the condenser heat exchanger 24. The subcooled liquid refrigerant then passes through a first refrigerant pass of the refrigerant-to-refrigerant heat exchanger 40, and thence traverses the expansion device 26 before passing through the evaporator heat exchanger 28. In traversing the expansion device 26, which may be an electronic expansion valve ("EXV") as depicted in FIGs. 2 and 3, or a mechanical thermostatic expansion valve ("TXV"), the liquid refrigerant is expanded to a lower temperature and lower pressure prior to passing to the evaporator heat exchanger 28.

In flowing through the heat exchange tube coil or tube bank of the evaporator heat exchanger 28, the refrigerant evaporates, and is typically superheated, as it passes in heat exchange relationship return air drawn from the cargo space 18 passing through the airside pass of the evaporator heat exchanger 28. The refrigerant vapor thence traverses a second refrigerant pass of the refrigerant-to-refrigerant heat exchanger 40 in heat exchange relationship with the liquid refrigerant passing through the first refrigerant pass thereof. Before entering the suction inlet of the compressor 22, the refrigerant vapor passes through the suction modulation valve 30 disposed downstream with respect to refrigerant flow of the refrigerant-to-refrigerant heat exchanger 40 and upstream with respect to refrigerant flow of the suction inlet of the compressor 22. The refrigeration unit controller 34 controls operation of the suction modulation valve 30 and selectively modulates the open flow area through the suction modulation valve 30 so as to regulate the flow of refrigerant passing through the suction modulation valve to the suction inlet of the compressor 22. By selectively reducing the open flow area through the suction modulation valve 30, the refrigeration unit controller 30 can selectively restrict the flow of refrigerant vapor supplied to the compressor 22, thereby reducing the capacity output of the transport refrigeration unit 20 and in turn reducing the power demand imposed on the engine 32.

Air drawn from within the container 16 by the evaporator fan(s) 29 associated with the evaporator heat exchanger 28, is passed over the external heat transfer surface of the heat exchange tube coil or tube bank of the evaporator heat exchanger 28 and circulated back into the interior space 18 of the container 16. The air drawn from the cargo box is referred to as "return air" and the air circulated back to the cargo box is referred to as "supply air." It is to be understood that the term "air' as used herein includes mixtures of air and other gases, such as for example, but not limited to nitrogen or carbon dioxide, sometimes introduced into a refrigerated container for transport of perishable product such as produce.

In the embodiment of the transport refrigeration system depicted in FIG. 2, the compressor 22 comprises a reciprocating compressor having a compressing mechanism (not shown) mounted on a shaft that is directly coupled to and driven by the fuel-fired engine 32. In this embodiment, the fan(s) 25 and the fan(s) 29 may also be driven by the fuel-fired engine 32 through a belt or chain drive. Additionally, the engine 32 may also power an alternator, again through a belt or chain drive, to generate electric current for powering the refrigerant unit controller and other on-board electrical or electronic components of the transport refrigeration system 10.

In the embodiment of the transport refrigeration system depicted in FIG. 3, the compressor 22 comprises a semi-hermetic scroll compressor having an internal electric drive motor and a compression mechanism having an orbital scroll mounted on a drive shaft driven by the internal electric drive motor that are all sealed within a common housing of the compressor 22. The fueled-fired engine 32 drives an electric generator 42 that generates electrical power for driving the compressor motor which in turn drives the compression mechanism of the compressor 22. The drive shaft of the fueled-fired engine drives the shaft of the generator 42. In this embodiment, the fan(s) 25 and the fan(s) 29 may be driven by electric motors that are supplied with electric current produced by the generator 42. In an electrically powered embodiment of the transport refrigeration system 10, the generator 42 comprises a single on-board engine driven synchronous generator configured to selectively produce at least one AC voltage at one or more frequencies.

In an embodiment, the fueled-fired engine 32 comprises a diesel fueled piston engine, such as for example a diesel engine of the type manufactured by Kubota Corporation. However, it is to be understood that virtually any engine may be used that meets the space requirements and is capable of powering the compressor 22 or the generator 42. By way of example, the engine 32 may comprise a diesel fueled piston engine, a gasoline fueled piston engine, a natural gas or propane fuel piston engine, as well as other piston or non-piston engines that are fuel-fired.

As noted previously, the transport refrigeration system 10 also includes an electronic refrigeration unit controller 34 that is configured to operate the transport refrigeration unit 20 to maintain a predetermined thermal environment within the interior space 18 defined within the cargo box 16 wherein the product is stored during transport. The controller 30 maintains the predetermined thermal environment by selectively activating and deactivating the various components of the refrigerant vapor compression system, including the compressor 22, the fan(s) 25 associated with the condenser heat exchanger 24, the fan(s) 29 associated with the evaporator heat exchanger 28, and various valves in the refrigerant circuit, including but not limited to the suction modulation valve 30 to selectively varying the refrigeration load capacity of the transport refrigeration unit 20.

In one embodiment, the refrigeration unit controller 34 includes a microprocessor and an associated memory. The memory of the controller 34 may be programmed to contain preselected operator or owner desired values for various operating parameters within the system. The programming of the controller is within the ordinary skill in the art. The controller 34 may include a microprocessor board that includes the microprocessor, an associated memory, and an input/output board that contains an analog-to-digital converter which receives temperature inputs and pressure inputs from a plurality of sensors located at various points throughout the refrigerant circuit and the refrigerated container, current inputs, voltage inputs, and humidity levels. The input/output board may also include drive circuits or field effect transistors and relays which receive signals or current from the controller 34 and in turn control various external or peripheral devices associated with the transport refrigeration system. The particular type and design of the controller 34 is within the discretion of one of ordinary skill in the art to select and is not limiting of the invention.

The refrigeration unit controller 34 is also in communication with an electronic engine controller 36. For example, the refrigeration unit controller 34 may be in closed loop communication with the electronic engine controller 36 by way of a controller area network (CAN) system. In operation, controller 34 executes a refrigeration control algorithm to control the refrigeration system components (as noted above). Controller 34 also executes an engine speed control algorithm to control a speed setting of engine 32. Controller 34 detects when a change in load on the refrigeration unit occurs or is imminent, and feeds forward a speed request offset to engine controller 36 to request a temporary speed change so that the engine speed better matches the anticipated load of the refrigeration unit. The load change may be due to one or more components of the refrigeration unit, such as the compressor and/or one or more fans. Engine controller 36 can increase or decrease speed of the engine 32 by adjusting the engine throttle. This speed request offset can be ramped up and down over time to create a more stable engine speed, and reduce stalls or overdrives of engine 32.

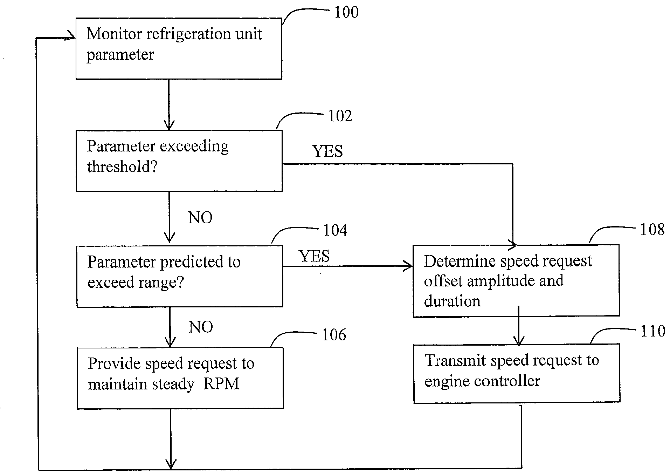

FIG. 4 depicts an exemplary engine speed control algorithm. At 100, controller 34 monitors a parameter of the transport refrigeration unit 20. The monitored parameter may be a temperature (e.g., temperature within container 16) or a pressure (e.g., discharge pressure of compressor 22) or a combination of a plurality of temperatures and or pressures. At 102, the parameter of the transport refrigeration unit 20 is compared to a threshold, such as an acceptable range for that parameter. For example, the temperature within container 16 may be compared to a setpoint range to determine if the temperature is within the desired range.

If at 102, the parameter of the transport refrigeration unit 20 does not exceed the range, flow proceeds to 104 where controller 34 predicts if the sensed parameter is expected to exceed the threshold (e.g., setpoint range) within a predetermined time period (e.g., within next 30 seconds). This prediction may be based on a rate of change of the parameter over time that indicates the parameter will exceed the threshold within the predetermined time period. Alternatively, parameter values may be applied to a model to predict upcoming parameter values. Other factors, such as ambient temperature measurements, may be used to predict if the parameter is expected to exceed the threshold within a predetermined time period.

If the parameter does not exceed the threshold at 102, and is not predicted to exceed the threshold at 104, then at 106, controller 34 provides a speed request signal to engine controller 36 that maintains the engine speed at a steady RPM. This is the steady state operational mode for the engine 32.

If the parameter exceeds the threshold at 102, or is predicted to exceed the threshold at 104, then flow proceeds to 108 where controller 34 determines an amplitude and duration of a speed request offset. The speed request offset is a signal provided to the engine controller 36 to adjust the speed of the engine (e.g., increase or decrease) to accommodate a change in the load on the refrigeration unit 20. The speed request offset may have a fixed amplitude and duration stored in controller 34. Alternatively, controller 34 may compute the amplitude and duration of the speed offset in response to sensed parameters of the system and/or load on the system. At 110, controller 34 provides the speed request offset to engine controller 36.

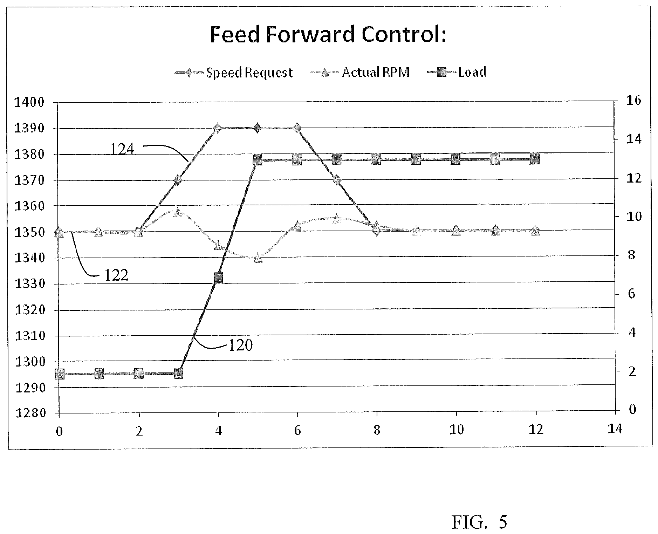

FIG. 5 is a plot of engine speed 122, system load 120 and speed request 124 in an exemplary embodiment. As shown in FIG. 5, the engine speed 122 and the speed request 124 are substantially equivalent when the load is at a steady state. At a time 2, an increase in load is anticipated, and the speed request 124 is increased by a speed request offset. This causes the engine speed 122 to increase briefly, until the load 120 begins increasing at time 3. As the load increases and stabilizes at a new level, the speed of the engine varies, but not dramatically due to the speed request offset. The speed request offset drops to zero after predetermined period of time, after which the speed request 124 and engine speed 122 are substantially equivalent.

The use of a feed forward speed request offset reduces variation in engine speed, creates a stable control scheme and prevents the engine speed from over speeding, drooping, or even engine stalling. Although FIG. 5 depicts an increase in engine speed in response to load change, it is understood that the speed request offset may reduce engine speed to prevent overdriving of engine 32.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method for controlling speed of an engine, the engine (32) providing power to a compressor (22) of a transport refrigeration unit (20), the method comprising:
generating a speed request, the engine speed responsive to the speed request; and
generating a speed request offset, the speed request offset being added to the speed request to adjust the speed of the engine (32);
monitoring a parameter of the transport refrigeration unit (20);
comparing the parameter of the transport refrigeration unit (20) to a threshold;
wherein generating the speed request offset is performed in response to the comparing;
**characterized in that** comparing the parameter of the transport refrigeration unit (20) to the threshold includes predicting that the parameter will exceed the threshold within a predetermined time.

2. The method of claim 1 wherein:
comparing the parameter of the transport refrigeration unit (20) to the threshold includes comparing the parameter to a range.

3. The method of claim 1 wherein:
the speed request offset has at least one of a predetermined amplitude and a predetermined duration.

4. The method of claim 1 wherein:
the speed request offset has at least one of a calculated amplitude and a calculated duration.

5. The method of claim 1 wherein:
the speed request offset increases engine speed.

6. The method of claim 1 wherein:
the speed request offset decreases engine speed.

7. The method of claim 1 wherein:
the parameter is indicative of load on the compressor (22) or load on a fan motor.

8. The method of claim 1 wherein:
the parameter is temperature of a container cooled by the transport refrigeration unit (20).

9. A transport refrigeration system comprising:
an engine (32);
a compressor (22) powered by the engine (32);
an engine controller (36) controlling a speed of the engine (32); and
a refrigeration unit controller (34) controlling a transport refrigeration unit (20), the refrigeration unit controller (34) implementing a process including:
generating a speed request, the engine speed responsive to the speed request;
generating a speed request offset, the speed request offset being added to the speed request to adjust the speed of the engine (32);
monitoring a parameter of the transport refrigeration unit (20);
comparing the parameter of the transport refrigeration unit (20) to a threshold; and
generating the speed request offset in response to the comparing;
**characterized in that** comparing the parameter of the transport refrigeration unit (20) to the threshold includes predicting that the parameter will exceed the threshold within a predetermined time.

10. The transport refrigeration system of claim 9 wherein:
comparing the parameter of the transport refrigeration unit (20) to the threshold includes comparing the parameter to a range.

11. The transport refrigeration system of claim 9 wherein:
the speed request offset has at least one of a predetermined amplitude and a predetermined duration.

12. The transport refrigeration system of claim 9 wherein:
the speed request offset has at least one of a calculated amplitude and a calculated duration.

13. The transport refrigeration system of claim 9 wherein:
the speed request offset increases or decreases engine speed.

14. The transport refrigeration system of claim 9 wherein:
the parameter is indicative of load on the compressor (22).

15. The transport refrigeration system of claim 9 wherein:
the parameter is temperature of a container cooled by the transport refrigeration unit (20).

## Patentansprüche

1. Verfahren zum Steuern der Drehzahl eines Motors, wobei der Motor (32) Leistung für einen Verdichter (22) einer Transportkühleinheit (20) bereitstellt, wobei das Verfahren Folgendes umfasst:
Erzeugen einer Drehzahlanforderung, wobei die Motordrehzahl auf die Drehzahlanforderung reagiert; und
Erzeugen eines Drehzahlanforderungsversatzes, wobei der Drehzahlanforderungsversatz zu der Drehzahlanforderung hinzugefügt wird, um die Drehzahl des Motors (32) einzustellen;
Überwachen eines Parameters der Transportkühleinheit (20);
Vergleichen des Parameters der Transportkühleinheit (20) mit einem Schwellenwert;
wobei das Erzeugen des Drehzahlanforderungsversatz in Reaktion auf den Vergleich ausgeführt wird;
**dadurch gekennzeichnet, dass** das Vergleichen des Parameters der Transportkühleinheit (20) mit dem Schwellenwert einschließt, vorherzusagen, dass der Parameter den Schwellenwert innerhalb einer vorgegebenen Zeit überschreiten wird.

2. Verfahren nach Anspruch 1, wobei:
das Vergleichen des Parameters der Transportkühleinheit (20) mit dem Schwellenwert das Vergleichen des Parameters mit einem Bereich einschließt.

3. Verfahren nach Anspruch 1, wobei:
der Drehzahlanforderungsversatz mindestens eines von einer vorgegebenen Amplitude und einer vorgegebenen Dauer aufweist.

4. Verfahren nach Anspruch 1, wobei:
der Drehzahlanforderungsversatz mindestens eines von einer berechneten Amplitude und einer berechneten Dauer aufweist.

5. Verfahren nach Anspruch 1, wobei:
der Drehzahlanforderungsversatz die Motordrehzahl erhöht.

6. Verfahren nach Anspruch 1, wobei:
der Drehzahlanforderungsversatz die Motordrehzahl verringert.

7. Verfahren nach Anspruch 1, wobei:
der Parameter für eine Last an dem Verdichter (22) oder eine Last an einem Gebläsemotor bezeichnend ist.

8. Verfahren nach Anspruch 1, wobei:
der Parameter der Temperatur eines Behälters entspricht, der von der Transportkühleinheit (20) gekühlt wird.

9. Transportkühlsystem, umfassend:
einen Motor (32);
einen Verdichter (22), der von dem Motor (32) angetrieben wird;
eine Motorsteuerung (36), die eine Drehzahl des Motors (32) steuert; und
eine Kühleinheitsteuerung (34), die eine Transportkühleinheit (20) steuert, wobei die Kühleinheitsteuerung (34) einen Prozess umsetzt, einschließend:
Erzeugen einer Drehzahlanforderung, wobei die Motordrehzahl auf die Drehzahlanforderung reagiert;
Erzeugen eines Drehzahlanforderungsversatzes, wobei der Drehzahlanforderungsversatz zu der Drehzahlanforderung hinzugefügt wird, um die Drehzahl des Motors (32) einzustellen;
Überwachen eines Parameters der Transportkühleinheit (20);
Vergleichen des Parameters der Transportkühleinheit (20) mit einem Schwellenwert; und
Erzeugen der Drehzahlanforderungsversatz in Reaktion auf den Vergleich;
**dadurch gekennzeichnet, dass** das Vergleichen des Parameters der Transportkühleinheit (20) mit dem Schwellenwert einschließt, vorherzusagen, dass der Parameter den Schwellenwert innerhalb einer vorgegebenen Zeit überschreiten wird.

10. Transportkühlsystem nach Anspruch 9, wobei:
das Vergleichen des Parameters der Transportkühleinheit (20) mit dem Schwellenwert das Vergleichen des Parameters mit einem Bereich einschließt.

11. Transportkühlsystem nach Anspruch 9, wobei:
der Drehzahlanforderungsversatz mindestens eines von einer vorgegebenen Amplitude und einer vorgegebenen Dauer aufweist.

12. Transportkühlsystem nach Anspruch 9, wobei:
der Drehzahlanforderungsversatz mindestens eines von einer berechneten Amplitude und einer berechneten Dauer aufweist.

13. Transportkühlsystem nach Anspruch 9, wobei:
der Drehzahlanforderungsversatz die Motordrehzahl erhöht oder verringert.

14. Transportkühlsystem nach Anspruch 9, wobei:
der Parameter für eine Last an dem Verdichter (22) bezeichnend ist.

15. Transportkühlsystem nach Anspruch 9, wobei:
der Parameter der Temperatur eines Behälters entspricht, der von der Transportkühleinheit (20) gekühlt wird.

## Revendications

1. Procédé de commande de vitesse d'un moteur, le moteur (32) fournissant de la puissance à un compresseur (22) d'une unité de réfrigération de transport (20), le procédé comprenant :
la génération d'une demande de vitesse, la vitesse de moteur répondant à la demande de vitesse ; et
la génération d'un décalage de demande de vitesse, le décalage de demande de vitesse étant ajouté à la demande de vitesse pour ajuster la vitesse du moteur (32) ;
la surveillance d'un paramètre de l'unité de réfrigération de transport (20) ;
la comparaison du paramètre de l'unité de réfrigération de transport (20) avec un seuil ;
dans lequel la génération du décalage de demande de vitesse est exécutée en réponse à la comparaison ;
**caractérisé en ce que** la comparaison du paramètre de l'unité de réfrigération de transport (20) avec le seuil comporte la prédiction que le paramètre dépassera le seuil dans un temps déterminé.

2. Procédé selon la revendication 1, dans lequel :
la comparaison du paramètre de l'unité de réfrigération de transport (20) avec le seuil comporte la comparaison du paramètre avec une plage.

3. Procédé selon la revendication 1, dans lequel :
le décalage de demande de vitesse a au moins l'une d'une amplitude prédéterminée et d'une durée prédéterminée.

4. Procédé selon la revendication 1, dans lequel :
le décalage de demande de vitesse a au moins l'une d'une amplitude calculée et d'une durée calculée.

5. Procédé selon la revendication 1, dans lequel :
le décalage de demande de vitesse augmente la vitesse de moteur.

6. Procédé selon la revendication 1, dans lequel :
le décalage de demande de vitesse diminue la vitesse de moteur.

7. Procédé selon la revendication 1, dans lequel :
le paramètre indique une charge sur le compresseur (22) ou une charge sur un moteur de ventilateur.

8. Procédé selon la revendication 1, dans lequel :
le paramètre est la température d'un récipient refroidi par l'unité de réfrigération de transport (20).

9. Système de réfrigération de transport comprenant :
un moteur (32) ;
un compresseur (22) alimenté par le moteur (32) ;
un dispositif de commande de moteur (36) commandant une vitesse du moteur (32) ; et
un dispositif de commande d'unité de réfrigération (34) commandant une unité de réfrigération de transport (20), le dispositif de commande d'unité de réfrigération (34) mettant en œuvre un processus comportant :
la génération d'une demande de vitesse, la vitesse de moteur répondant à la demande de vitesse ;
la génération d'un décalage de demande de vitesse, le décalage de demande de vitesse étant ajouté à la demande de vitesse pour ajuster la vitesse du moteur (32) ;
la surveillance d'un paramètre de l'unité de réfrigération de transport (20) ;
la comparaison du paramètre de l'unité de réfrigération de transport (20) avec un seuil ; et
la génération du décalage de demande de vitesse en réponse à la comparaison ;
**caractérisé en ce que** la comparaison du paramètre de l'unité de réfrigération de transport (20) avec le seuil comporte la prédiction que le paramètre dépassera le seuil dans un temps prédéterminé.

10. Système de réfrigération de transport selon la revendication 9, dans lequel :
la comparaison du paramètre de l'unité de réfrigération de transport (20) avec le seuil comporte la comparaison du paramètre avec une plage.

11. Système de réfrigération de transport selon la revendication 9, dans lequel :
le décalage de demande de vitesse a au moins l'une d'une amplitude prédéterminée et d'une durée prédéterminée.

12. Système de réfrigération de transport selon la revendication 9, dans lequel :
le décalage de demande de vitesse a au moins l'une d'une amplitude calculée et d'une durée calculée.

13. Système de réfrigération de transport selon la revendication 9, dans lequel :
le décalage de demande de vitesse augmente ou diminue la vitesse de moteur.

14. Système de réfrigération de transport selon la revendication 9, dans lequel :
le paramètre indique une charge sur le compresseur (22).

15. Système de réfrigération de transport selon la revendication 9, dans lequel :
le paramètre est la température d'un récipient refroidi par l'unité de réfrigération de transport (20).
